# EUROPÄISCHE PATENTSCHRIFT

(11) **EP 1 070 837 B1**
(45) Veröffentlichungstag und Bekanntmachung des Hinweises auf die Patenterteilung: **03.09.2003**
(21) Anmeldenummer: 00114495.5
(22) Anmeldetag: 06.07.2000
(51) Int. Cl.: F02B 37/04, F02B 39/10

(54) **Vorrichtung und Verfahren zur Leistungssteigerung einer mittels Abgasturboladers aufgeladenen Brennkraftmaschine**
Device and method for increasing power of a turbocharged internal combustion engine
Dispositif et procédé pour augmenter la puissance d'un moteur turbochargé

(30) Priorität: 23.07.1999 DE 19934606
(43) Veröffentlichungstag der Anmeldung: 24.01.2001
(73) Patentinhaber: MAN Steyr AG, 4400 Steyr (AT)
(72) Erfinder: Schlögl, Harald Dr.-Ing., 4400 Steyr (AT); Raab, Gottfried, Dipl.-Ing., 4320 Perg (AT); Rammer, Franz, Dipl.-Ing., 4493 Wolfern (AT)

(56) Entgegenhaltungen:
- DE-A- 19 708 721
- US-A- 4 453 381
- US-A- 4 669 269
- PATENT ABSTRACTS OF JAPAN vol. 011, no. 210 (M-604), 8. Juli 1987 (1987-07-08) & JP 62 026333 A (ISUZU MOTORS LTD), 4. Februar 1987 (1987-02-04)
- PATENT ABSTRACTS OF JAPAN vol. 1997, no. 07, 31. Juli 1997 (1997-07-31) & JP 09 088619 A (ISUZU MOTORS LTD), 31. März 1997 (1997-03-31)

## Beschreibung

Die Erfindung betrifft gemäß dem Oberbegriff des Anspruches 1 eine Vorrichtung und gemäß dem Oberbegriff des Anspruches 8 ein Verfahren zur Leistungssteigerung einer mittels Abgasturbolader aufgeladenen, die Antriebsquelle eines Fahrzeugs oder stationären Anlage bildenden Brennkraftmaschine.

Moderne Brennkraftmaschinen werden zur Steigerung ihrer Leistungsdichte mit einem Abgasturbolader ausgerüstet. Neben den bekannten Vorteilen haben solche Ladesysteme aber auch an sich bekannte Nachteile, wie verzögertes Ansprechverhalten, geringer Ladedruck bei niedrigen Motordrehzahlen, schlechtes Motorbremsverhalten bei kleinen Motorhubräumen, nur schmales Drehzahlband mit optimalem Wirkungsgrad, welche Kriterien sich während des Motorbetriebes zumindest in einigen Betriebsbereichen, insbesondere bei Beschleunigungen, ungünstig auswirken.

Zur Reduzierung dieser Nachteile sind schon verschiedene, mehr oder weniger taugliche Lösungen vorgeschlagen worden. Zum Beispiel werden Abgasturbolader mit variabler Turbinengeometrie verwendet, die gegenüber solchen mit ungeregelten Abgasturbinen erheblich teurer sind und außerdem gegenüber elektrisch angetriebenen Ladern einen langsameren Ladedruckaufbau bewirken. Bekannte elektrisch angetriebene Abgasturbolader sind mit ihrer Welle an einem Elektromotor angeschlossen, der seine elektrische Energie ausschließlich aus der fahrzeugeigenen Batterie bezieht. Ähnliche Verhältnisse sind bei dem sogenannten Turbo-PAC-System gegeben. Dort wird ein zusätzlicher Verdichter von einem Elektromotor angetrieben, der seine Antriebsenergie ausschließlich aus der Fahrzeugbatterie bezieht. Diese bekannten elektromotorischen Zusatzantriebe haben alle den Nachteil, daß ihre Funktionsdauer sich an der Batteriekapazität orientieren muß, weil letztere insbesondere bei stark instationärem Betrieb der Brennkraftmaschine mit vielen Beschleunigungs- und Bremsvorgängen in der Regel rasch erschöpft ist. Eine Serienanwendung solcher Lösungen war daher nicht möglich.

Eine andere Lösung offenbart die US 4,669,269 A, von der die Erfindung ausgeht. Dabei ist einer mittels Abgasturbolader aufgeladenen Brennkraftmaschine eine Vorrichtung zur Leistungssteigerung zugeordnet. Diese besteht aus einem zusätzlichen Verdichter, dessen Verdichterrad an der Welle eines Elektromotors angeschlossen ist. Dieser Elektromotor wird für Beschleunigungsvorgänge von einer Steuereinheit her in Gang gesetzt und erhält seine Antriebsenergie von einem Generator, der mit der Kurbelwelle der Brennkraftmaschine in mechanischer Antriebsverbindung steht. Generator und Elektromotor sind gleicher Bauart. Der Elektromotor ist ein Permanentmagnetmotor mit kleiner Schwungmasse und soll in der Lage sein, den Zusatzverdichter nahezu verzögerungsfrei aus dem Stillstand heraus zu beschleunigen.

Es ist ausgehend von diesem Stand der Technik Aufgabe der Erfindung, eine Vorrichtung und ein Verfahren zur Leistungssteigerung einer Brennkraftmaschine bereitzustellen, das hinsichtlich seiner Komponenten und Betriebsabläufe konkreter definiert ist und funktionell mehr Möglichkeiten liefert als das aus der US 4,669,269 A bekannte System.

Diese Aufgabe ist erfindungsgemäß durch eine Vorrichtung zur Leistungssteigerung mit den im Anspruch 1 gekennzeichneten Merkmalen und außerdem durch ein Verfahren zur Leistungssteigerung mit den im Anspruch 8 gekennzeichneten Merkmalen gelöst.

Hauptbauteile der Erfindung sind ein zusätzlich zum Abgasturbolader vorgesehener Verdichter, ein dessen Verdichterrad antreibender High-Speed-Elektromotor, eine zweite Elektromaschine, eine Batterie und eine elektrische/elektronische Regeleinheit. Die zweite Elektromaschine steht mit ihrer Welle in Antriebsverbindung mit der Kurbelwelle der Brennkraftmaschine und wird daher im Generatorbetrieb mit einer Drehzahl angetrieben, die sich aus der aktuellen Drehzahl der Kurbelwelle und einer Übersetzung zwischen dieser und ihrer Welle ergibt. Durch entsprechende Regelungsvorgaben der Regeleinheit wird wechselweise von der generatorisch betriebenen zweiten Elektromaschine und/oder der Batterie elektrische Antriebsenergie an den High-Speed-Elektromotor für dessen Betrieb geleitet. Aufgrund seiner Auslegung und entsprechender Energieversorgung ist der High-Speed-Elektromotor in der Lage, innerhalb von Sekundenbruchteilen eine extreme Drehzahländerung auf beispielsweise 80000 1/min, erforderlichenfalls auch höhere Drehzahlen zu vollziehen und gleichzeitig eine Ausgangsleistung von etwa 5 bis ca. 30 KW bereitzustellen. Mittels des solchermaßen elektromotorisch beschleunigbaren bzw. hochdrehzahlig betreibbaren Verdichterrades ist somit Zusatzluft mit einem Absolutdruck von bis zu ca. 3 bar in die Ladeluftleitung zur Ladeluftsammelleitung und über diese in die Brennkraftmaschine förderbar. Dabei ist mittels der Regeleinheit durch intelligentes Management die Lieferung von elektrischer Energie durch die zweite Elektromaschine und/oder die Batterie an den High-Speed-Elektromotor dessen Betrieb so steuerbar, dass in jeder Betriebsart der Brennkraftmaschine, also sowohl während des Zugbetriebes als auch während des Motorbremsbetriebes, leistungssteigemde Zusatzluft mit optimal angepasster Menge und optimal angepasstem Druck über den notwendigen Zeitraum mittels des mit entsprechend notwendiger Drehzahl angetriebenen Verdichterrades bereitstellbar und der Brennkraftmaschine zuführbar ist. Im Zugbetrieb bedeutet dies, dass bei Beschleunigungen aus niedrigen Drehzahlen heraus das bisherige Turboloch ausgeschaltet wird, weil vom elektromotorisch angetriebenen Verdichterrad innerhalb kürzester Zeit die nötige Zusatzluft zur Verfügung gestellt wird. Wenn die Brennkraftmaschine auf Bremsbetrieb geschaltet ist, bedeutet dies, dass mittels ihr zugeführter Zusatzluft die Füllung der Zylinder und damit auch der Arbeitsdruck in den Zylindern erhöht wird, gegen den die zylinderinternen Kolben bremskrafterhöhend arbeiten müssen.

Ein weiterer Vorteil der erfindungsgemäßen Lösung besteht darin, dass nach einem Kaltstart der Brennkraftmaschine bereits im Leerlauf ohne Batteriebelastung aufgrund der Energielieferung durch die zweite Elektromaschine Ladedruck mittels des Zusatzluft liefernden Verdichters zur Verfügung gestellt werden kann. Damit wird die Warmlaufphase der Brennkraftmaschine stark verkürzt und in dieser Zeit auch die Emission schädlicher Abgase stark reduziert.

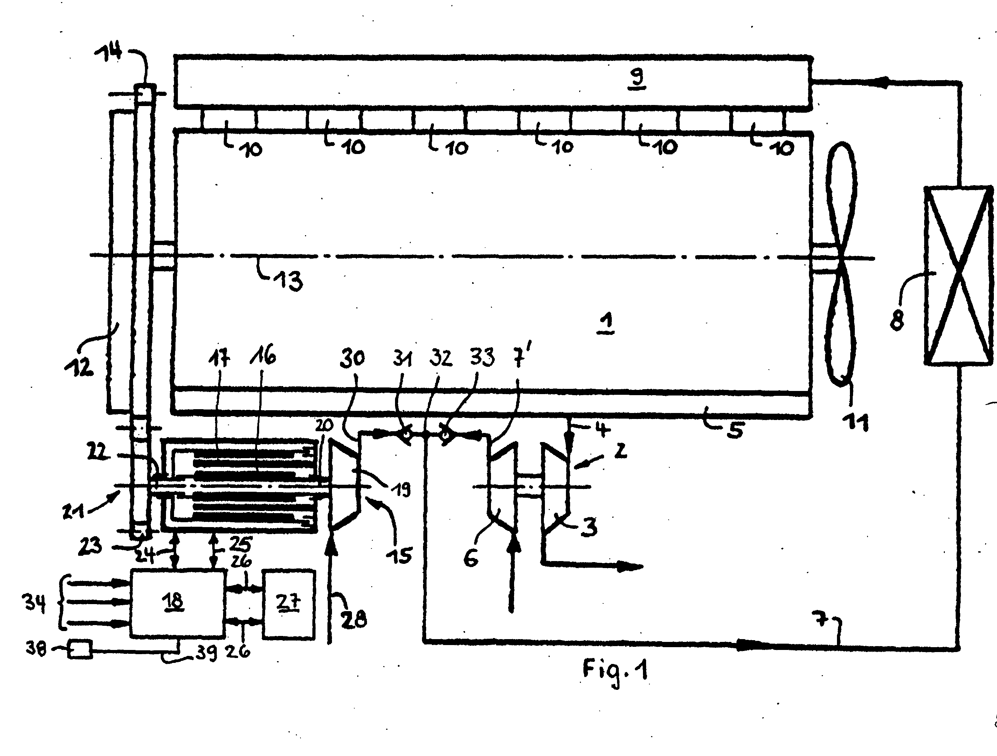

Nachstehend sind die erfindungsgemäße Vorrichtung und das erfindungsgemäße Verfahren anhand der Zeichnung noch näher erläutert. In der Zeichnung zeigen Fig. 1 bis 3 schematisch je eine Ausführungsform der erfindungsgemäßen Vorrichtung, wobei gleiche Bauteile/Teile mit gleichem Bezugszeichen gekennzeichnet sind.

In der Zeichnung ist schematisch eine Brennkraftmaschine 1, z. B. ein Dieselmotor, dargestellt, bei dem es sich um die Antriebsquelle in einem Fahrzeug wie Pkw, Lkw, Omnibus, sonstigem Nutzfahrzeug, Lokomotive, Luft- oder Wasserfahrzeug, oder einer stationären Anlage wie Notstromaggregat handeln kann.

Mit 2 ist ein der Brennkraftmaschine 1 zugeordneter Abgasturbolader bezeichnet, dessen Abgasturbine 3 über eine Zuleitung 4 mit Abgas aus der - je nach Zylinderanzahl - ein- oder mehrflutigen Abgassammelleitung 5 gespeist wird und dessen Verdichter 6 verdichtete Luft über eine Ladeluftleitung 7 mit Ladeluftkühler 8 in eine Ladeluftsammelleitung 9 fördert, von der sie über Einlaßkanäle 10 und nicht dargestellte Einlassventile in die einzelnen Zylinder der Brennkraftmaschine gelangt. Mit 11 ist ein Lüfter und mit 12 ein Schwungrad bezeichnet, der bzw. das jeweils an einem Ende der Kurbelwelle 13 der Brennkraftmaschine 1 angeordnet ist. Mit 14 ist ein Anlasserritzel am Umfang des Schwungrades 12 bezeichnet.

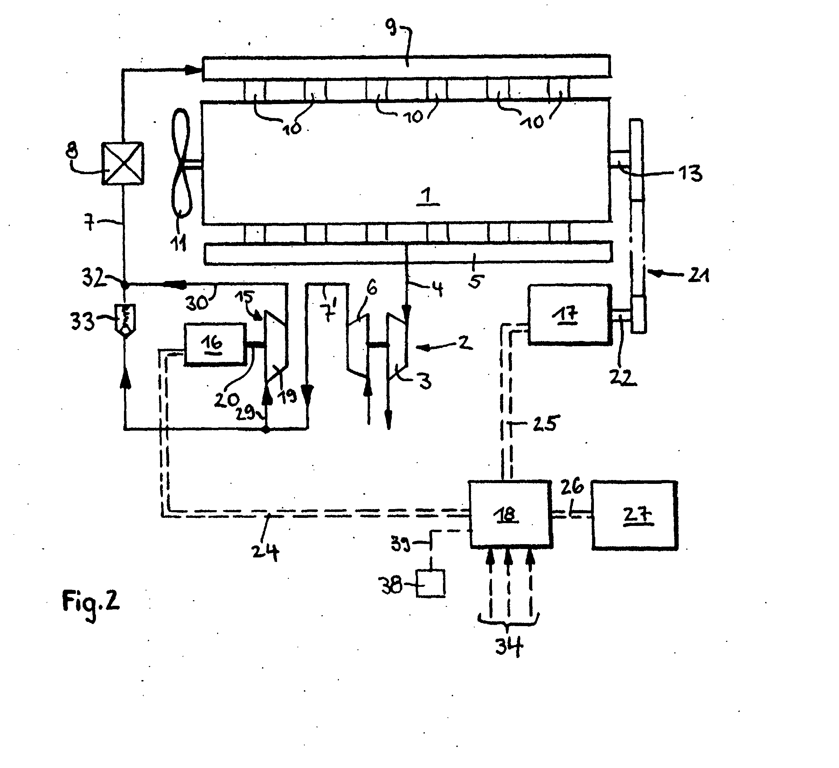

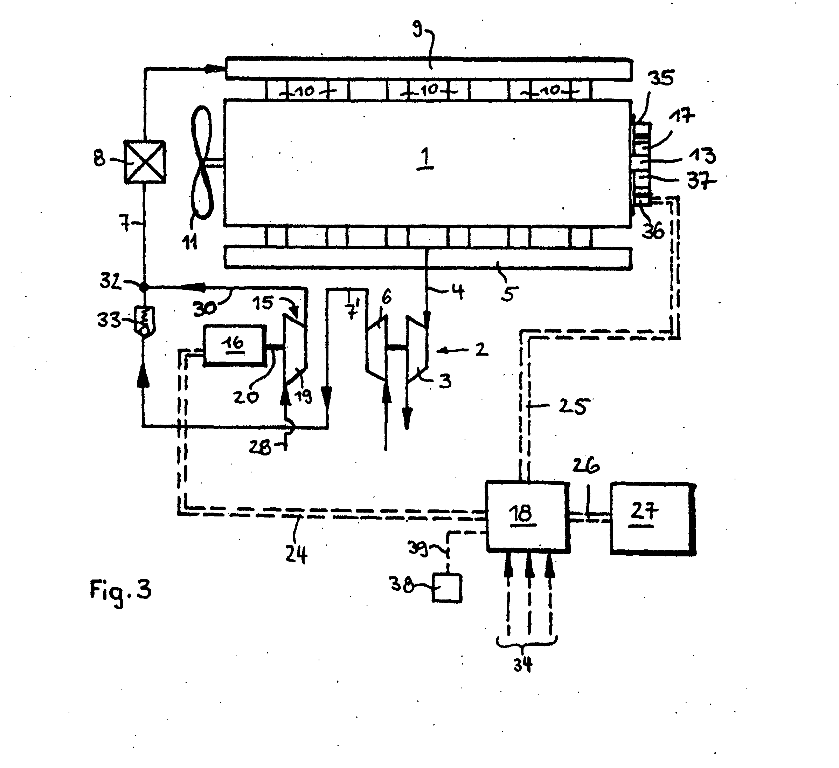

Erfindungsgemäß ist dieser mittels Abgasturbolader 2 aufladbaren Brennkraftmaschine 1 eine Vorrichtung zur Leistungssteigerung zugeordnet. Diese besteht aus vier Hauptbestandteilen, nämlich einem zusätzlich zum Abgasturbolader 2 vorgesehenen Verdichter 15, einem High-Speed-Elektromotor 16, einer zweiten Elektromaschine 17 und einer Regeleinheit 18. Das Verdichterrad 19 des zusätzlichen Verdichters 15 ist mit der Welle 20 des High-Speed-Elelctromotors 16 verbunden. Die zweite Elektromaschine 17 ist direkt (siehe Fig. 3) oder über einen Triebstrang 21 (siehe Fig. 1, 2) an der Kurbelwelle 13 der Brennkraftmaschine 1 angeschlossen und für Generatorbetrieb von letzterer her angetrieben, gegebenenfalls aber auch als Anlasser und Zusatzantriebsquelle motorisch betreibbar. Im Beispiel von Fig. 1 ist der Triebstrang 21 durch ein auf der Welle 22 der zweiten Elektromaschine 17 drehfest befestigtes Ritzel 23, das mit dem Anlasserritzel 14 am Schwungrad 12 kämmt, hergestellt. Im Fall des Beispiels gemäß Fig. 2 kann der Triebstrang 21 durch einen Riemenbetrieb oder ein Stirnradgetriebe realisiert sein.

Die beiden Elektromaschinen 16, 17 stehen über elektrische Steuer- und Betriebsleitungen 24 bzw. 25 mit der Regeleinheit 18 und über diese sowie Betriebsleitungen 26 mit einer beispielsweise auf 42 V ausgelegten Batterie 27 in Verbindung, die im Falle eines Fahrzeuges auch das Bordnetz versorgt. Die zweite Elektromaschine 17 kann entweder nur für Generatorbetrieb oder alternativ auch als Anlasser und in weiterer Funktion gegebenenfalls auch als Zusatzantriebsquelle vorgesehen sein. Der High-Speed-Elektromotor 16 erhält die benötigte elektrische Antriebsenergie über die Regeleinheit 18 von der zweiten generatorisch betriebenen Elektromaschine 17 und/oder der Batterie 27. Die elektrisch/elektronische und rechnerunterstützt arbeitende Regeleinheit 18 regelt dabei den Betrieb der beiden Elektromaschinen 16, 17 sowie die Ladung der Batterie 27 und deren Energieabgabe für den Antrieb der Elektromaschinen 16, 17 auf der Basis festgelegter Regelstrategien. Wenn die zweite Elektromaschine 17 nicht als Generator, sondern als Motor betrieben wird, fungiert sie als Anlasser, gegebenenfalls auch als Zusatzantriebsquelle für die Brennkraftmaschine 1, wobei sie ihre elektrische Antriebsenergie geregelt durch die Regeleinheit 18 aus der Batterie 27 bezieht. Wenn als Generator betrieben, was die Grundfunktion darstellt, erzeugt die von der Brennkraftmaschine 1 her mechanisch angetriebene zweite Elektromaschine 17 elektrische Energie, die dem High-Speed-Elektromotor 16, falls dieser betrieben werden soll, und/oder der Batterie 27 geregelt durch die Regeleinheit 18 zugeführt wird.

Der High-Speed-Elektromotor 16 ist von solcher Bauart und über die Regeleinheit 18 im Zusammenwirken mit der zweiten generatorisch betriebenen Elektromaschine 17 und/oder der Batterie 27 hinsichtlich seines Betriebes derart steuerbar, dass er innerhalb von Sekundenbruchteilen eine extreme Drehzahländerung auf beispielsweise 80000 1/min, erforderlichenfalls auch höhere Drehzahlen vollziehen und eine Ausgangsleistung von etwa 5 bis ca. 30 KW bereitstellen kann, wodurch mittels des solchermaßen beschleunigbaren bzw. hochdrehzahlig betreibbaren Verdichterrades 19 des zusätzlichen Verdichters 15 Zusatzluft mit einem Absolutdruck von bis zu ca. 3 förderbar ist. Dabei ist mittels der Regeleinheit 18 der Betrieb des High-Speed-Elektromotors 16 derart beeinflussbar, dass in jeder Betriebsart der Brennkraftmaschine 1, also sowohl während des Zugbetriebes als auch während des Motorbremsbetriebes, leistungssteigernde Zusatzluft mit optimal angepasster Menge und optimal angepasstem Druck über den notwendigen Zeitraum durch das mit entsprechend notwendiger Drehzahl betriebene Verdichterrad 19 des zusätzlichen Verdichters 15 lieferbar ist. Dabei saugt der zusätzliche Verdichter 15 über seinen Eingang und eine daran angeschlossene Saugleitung 28 Luft direkt aus der Atmosphäre (siehe Fig. 1 und 3) oder über eine Zuleitung 29 aus der Ladeluftleitung 7. Der zusätzliche Verdichter 15 fördert die von ihm erzeugte Zusatzluft über eine an seinem Ausgang abgehende Leitung 30 in die Ladeluftleitung 7. Im Fall des Beispiels gemäß Fig. 1 ist in die Leitung 30 ein nur in Förderrichtung durchlässiges Rückschlagventil 31 eingebaut. Um zu vermeiden, dass sich ein negatives Druckgefälle zum Verdichter 6 des Abgasturboladers 2 hin ergibt, ist in den Leitungsabschnitt 7' der Ladeluftleitung 7, der zwischen dem Ausgang des Verdichters 6 und der Anschlussstelle 32 der Leitung 30 verläuft, ein nur in Förderrichtung des Verdichters 6 durchlässiges Rückschlagventil 33 eingebaut. Dadurch ist sichergestellt, dass vom zusätzlichen Verdichter 15 geförderte Zusatzluft höheren Druckes in der Ladeluftleitung 7 immer stromabwärts zum Ladeluftkühler 8 hin und über diesen in die Ladeluftsammelleitung 9 strömt.

Nachfolgend ist noch auf verschiedene Details der einzelnen Komponenten der erfindungsgemäßen Vorrichtung eingegangen.

Der High-Speed-Elektromotor 16 ist hinsichtlich seiner Maximaldrehzahl im Hinblick auf die Größe und Leistungsfähigkeit des verwendeten Verdichters 15 und die Art der Beschaufelung des angeschlossenen Verdichterrades 19 ausgelegt. Je kleiner der Verdichter 15, desto höher die notwendige Drehzahl. Diese kann dann auch in Bereichen von 100000 1/min und mehr liegen. Hinsichtlich seiner Leistung ist der High-Speed-Elektromotor 16 auf die Bauart und Leistungsfähigkeit des angeschlossenen zusätzlichen Verdichters 15 und das Hubvolumen der zugehörigen Brennkraftmaschine 1 abgestellt. Je größer das Hubvolumen, desto leistungsstärker muss der High-Speed-Elektromotor 16 ausgelegt sein.

Der High-Speed-Elektromotor 16 kann räumlich getrennt von der zweiten Elektromaschine 17 (siehe Fig. 2 und 3) und mit dem zusätzlichen Verdichter 15 zu einer Baugruppe vereinigt benachbart zum Abgasturbolader 2 außen an der Brennkraftmaschine angeordnet sein. Die räumliche Nähe zum Abgasturbolader 2 ist nicht zwingend erforderlich, schafft aber kurze Leitungswege 7, 30.

Alternativ hierzu kann der High-Speed-Elektromotor 16 mit der zweiten Elektromaschine 17 aber auch zu einem speziellen 2-stufigen Elektromaschinenaggregat vereinigt sein - siehe Fig. 1. Im Beispiel gemäß Fig. 1 sind die beiden Elektromaschinen 16, 17 innerhalb des Elektromaschinenaggregates koaxial ineinander vereinigt, wobei der High-Speed-Elektromotor 16 den Innenteil mit einem relativ durchmesserkleinen Rotor bildet, der in einem gemeinsamen Außengehäuse von einem gemeinsamen Stator und dieser wiederum vom Rotor der zweiten Elektromaschine 17 umgeben ist.

Wenn die zweite Elektromaschine 17 ausschließlich als Generator vorgesehen und auf diesen Zweck hin technisch und funktional abgestimmt ist, kann sie außen an der Brennkraftmaschine 1 an geeigneter Stelle derselben angeordnet und von der Kurbelwelle 13 der Brennkraftmaschine 1 her über den Triebstrang 21 - Zahnriementrieb oder Stirnradgetriebezug - angetrieben werden.

Falls die zweite Elektromaschine 17 aber nicht nur als Generator wirken soll, sondern motorisch betrieben auch als Anlasser für die Brennkraftmaschine 1 eventuell auch noch als zeitweise wirksame Zusatzantriebsquelle fungieren soll, ist sie technisch, funktional und leistungsmäßig auf die Erfüllung auch dieser Zusatzzwecke abgestellt. In diesem Fall steht die zweite Elektromaschine 17 entweder - wie aus Fig. 1 ersichtlich - mit ihrer Welle 22 und dem darauf befestigten Ritzel 23 mit dem Anlasserzahnkranz 14 am Schwungrad 12 und über dieses mit der Kurbelwelle 13 in ständiger Antriebsverbindung. Die Alternative hierzu zeigt Fig. 3. Dort ist die zweite, als Generator, Anlasser und gegebenenfalls auch als Zusatzantriebsquelle fungierende Elektromaschine 17 koaxial zur Kurbelwelle 13 an einer Stimseite der Brennkraftmaschine 1 angeordnet. Dabei ist das Elektromaschinengehäuse 35 mit dem Stator 36 am Kurbelgehäuse angeflanscht und der Rotor 37 der Elektromaschine 17 an der Kurbelwelle 13 der Brennkraftmaschine 1 angeschlossen.

Mit 38 ist eine über eine Leitung 39 mit der Regeleinheit 18 in Verbindung stehende Anschlussbuchse bezeichnet, die mit einer externen Stromquelle verbindbar ist, über die bei Bedarf, z. B. für Ladezwecke der Batterie oder Versuchs-/Prüfzwecke, elektrische Energie einspeisbar ist.

Die Regeleinheit 18 weist außer bestimmten Leistungskomponenten einen Mikroprozessor, eine Ein- und Ausgabeperipherie, Daten- und Programmspeicher für Regel- und Steuerzwecke auf, welche Komponenten über ein Datenbussystem miteinander verknüpft sind. In den Datenspeichem sind Kennfelder/Betriebsdaten der Brennkraftmaschine 1, der Elektromaschinen 16, 17 und der Batterie 27, im Programmspeicher Programme für die Steuerung der Elektromaschinen 16, 17 sowie die Aufladung der Batterie 27 und deren Energieabgabe abgelegt. Die Regeleinheit 18 erhält verschiedene, für den Betrieb der Brennkraftmaschine 1 maßgebliche Istwertsignale über entsprechende Signalleitungen 34 zugeführt und verarbeitet diese per Programm im Vergleich mit abgespeicherten Kennfelddaten. Dadurch ist der Betrieb des High-Speed-Elektromotors 16 so beeinflussbar, dass in jeder Betriebsart der Brennkraftmaschine 1, also sowohl während des Zugbetriebes als auch während des Motorbremsbetriebes, leistungssteigernde Zusatzluft mit optimal angepasster Menge und optimal angepasstem Druck über den notwendigen Zeitraum mittels das mit entsprechend notwendiger Drehzahl angetriebenen Verdichterrades 19 des Verdichters 15 bereitstellbar und der Brennkraftmaschine 1 zuführbar ist.

Der Zusatzluft liefernde Verdichter 15 ist mithin im gesamten Betriebskennfeld der Brennkraftmaschine 1 mit beliebig regelbarer Leistung des High-Speed-Elektromotors 16 betreibbar. Letzterer kann aber auch - sofern keine Zusatzluft erforderlich ist - durch entsprechende Befehle der Regeleinheit 18 außer Betrieb gesetzt werden.

Bei der Beschleunigung des Verdichterrades 19 des Zusatzluft liefernden Verdichters 15 mittels des High-Speed-Elektromotors 16 wird die hierfür notwendige elektrische Leistung von der generatorisch betriebenen zweiten Elektromaschine 17 und/oder aus der Batterie 27 bereitgestellt, wobei die Aufteilung der Leistungsanteile durch intelligentes Drehzahlregelungsmanagement seitens der Regeleinheit 18 in der Weise erfolgt, dass eine maximal zulässige Belastung der Batterie 27 nicht überschritten wird.

Mit einer wie vorstehend beschriebenen Vorrichtung lässt sich das erfindungsgemäße Verfahren zur Leistungssteigerung einer Brennkraftmaschine wie folgt beschreiben:

Mittels des High-Speed-Elektromotors 16, der innerhalb von Sekundenbruchteilen eine extreme Drehzahländerung auf beispielsweise 80000 1/min und mehr vollziehen sowie eine Ausgangsleistung von etwa 5 bis ca. 30 KW bereitstellen kann und die benötigte elektrische Antriebsenergie über die Regeleinheit 18 von der zweiten, von der Kurbelwelle 13 der Brennkraftmaschine 1 her mechanisch angetriebenen und generatorisch arbeitenden Elektromaschine 17 und/oder der Batterie 27 erhält, und mittels des mit seinem Verdichterrad 19 an der Welle 20 des High-Speed-Elektromotors 16 angeschlossenen, zusätzlich zum Abgasturbolader 2 vorgesehenen Verdichters 15 ist Zusatzluft mit einem Absolutdruck von bis zu ca. 3 bar förderbar. Dabei wird durch die elektrisch/elektronische, rechnerunterstützt arbeitende Regeleinheit 18 der Betrieb der beiden Elektromaschinen 16, 17 sowie die Aufladung der Batterie 17 und deren Energieabgabe für motorischen Betrieb der Elektromaschinen 16, 17 auf der Basis festgelegter Regelstrategien geregelt und dabei der Betrieb des High-Speed-Elektromotors 16 so gesteuert, dass in jeder Betriebsart der Brennkraftmaschine 1, also sowohl während des Zugbetriebes als auch während des Motorbremsbetriebes, leistungssteigernde Zusatzluft mit optimal angepasster Menge und optimal angepasstem Druck über den notwendigen Zeitraum mittels des mit entsprechend hoher Drehzahl betriebenen Verdichterrades 19 des zusätzlichen Verdichters 15 bereitgestellt und der Brennkraftmaschine 1 zugeführt wird.

Die Lieferung von Zusatzluft durch den zusätzlichen Verdichter 15 erfolgt dabei im gesamten Betriebskennfeld der Brennkraftmaschine 1 durch entsprechend bedarfsgerecht angepasste Leistungseinstellung des High-Speed-Elektromotors 16. In Betriebsphasen der Brennkraftmaschine 1, in denen keine Zusatzluft notwendig ist, wird dieses durch Abschalten des High-Speed-Elektromotors 16 bzw. dessen Energieversorgung durch entsprechende Befehle der Regeleinheit 18 bewirkt.

Bei Durchführung eines solchen Zusatzluftlieferprozesses kann dem das Verdichterrad 19 antreibenden High-Speed-Elektromotor 16 die für seinen Antrieb notwendige elektrische Energie sowohl von der zweiten Elektromaschine 17 als auch der Batterie 27 zur Verfügung gestellt werden, wobei durch intelligentes Drehzahlmanagement von der Regeleinheit 18 her eine Aufteilung der Leistungsanteile in der Weise erfolgt, dass eine maximal zulässige Belastung der Batterie 27 nicht überschritten wird.

Nachfolgend ist beispielhaft auf über die Regeleinheit 18 bewirkte Regelstrategien für den Betrieb des das Verdichterrad 19 des zusätzlichen Verdichters 15 antreibenden High-Speed-Elektromotors 16 eingegangen, wie sie z. B. in Verbindung mit einer ein Fahrzeug antreibenden Brennkraftmaschine 1 zur Anwendung kommen kann. Diese Regelstrategien stellen sich wie folgt dar:
A) Zum Motorbremsen: Sobald ein Motorbremsvorgang initiiert und über eine Signalleitung 34 der Regeleinheit 18 gemeldet ist, wird von dieser ein schnellstmögliches Hochfahren des High-Speed-Elektromotors 16 auf maximale Antriebsleistung durch ausschließliche Energieversorgung von der generatorisch betriebenen zweiten Elektromaschine 17 bewirkt und anschließend ein stationärer Betrieb des High-Speed-Elektromotors 16 mit maximal zulässiger Leistung durch Energieversorgung von der zweiten, generatorisch betriebenen Elektromaschine 17 und/oder der Batterie 27 her bewirkt. Das heißt, es wird vom Verdichter 15 Zusatzluft in großer Menge und mit hohem Druck gefördert und bedeutet, dass während des Motorbremsbetriebes die Bremsleistung der brennkraftmaschinenintern vorhandenen Motorbremsvorrichtungen aufgrund der höheren Füllung der Zylinder mit eingebrachter Zusatzluft erheblich gesteigert ist. Falls die volle Motorstaubremsleistung nicht gefordert ist, zum Beispiel innerhalb eines Bremsen-Managements, wird der High-Speed-Elektromotor 16 abgeschaltet.
B) Zum Beschleunigen (drehzahlabhängig) oder bei notwendigem Lastsprung der Brennkraftmaschine:
   1) Sobald bei einem eingelegten Gang nach Kupplungsbetätigung ein Schaltvorgang vom Fahrer durchgeführt und dieses über eine Signalleitung 34 der Regeleinheit 18 mitgeteilt ist, wird von dieser ein Hochfahren der Drehzahl des High-Speed-Elektromotors 16 auf ca. 1/4 bis 1/2 der Maximaldrehzahl durch Energieversorgung ausschließlich von der generatorisch betriebenen zweiten Elektromaschine 17 her bewirkt.
   2) Sobald nach einem Schaltvorgang und den vorgenannten Maßnahmen eine Gas- bzw. Fahrpedalbetätigung durch den Fahrer erfolgt und dieses sowie der erfasste Betätigungsweg und die erfasste Betätigungsgeschwindigkeit des Pedals über eine Signalleitung 34 der Regeleinheit 18 mitgeteilt ist, wird von dieser der pedalmäßig signalisierte Beschleunigungswunsch in ein weiteres Hochfahren der Drehzahl des High-Speed-Elektromotors 16 durch Energieversorgung aus der generatorisch betriebenen zweiten Elektromaschine 17 bewirkt. Bei Bedarf kann zusätzlich Energie aus der Batterie 27 angefordert werden.
   3) Sobald mit eingelegtem Gang aus einem quasistationären Fahrbetrieb mit niedriger Drehzahl der Brennkraftmaschine 1 heraus das Fahrzeug beschleunigt werden soll, was der Fahrer durch entsprechende Gas- bzw. Fahrpedalbetätigung vorgibt und was der Regeleinheit 18 hinsichtlich Pedalweg und -betätigungsgeschwindigkeit Ober eine Signalleitung 34 gemeldet wird, wird von der Regeleinheit 18
      a) zunächst ein Hochfahren der Drehzahl des High-Speed-Elektromotors 16 auf ca. 1/2 der Maximaldrehzahl durch Energieversorgung aus der Batterie 27 sowie der generatorisch betriebenen Elektromaschine 17 und
      b) anschließend ein weiteres Hochfahren der Drehzahl des High-Speed-Elektromotors 16 auf einen notwendigen Drehzahlwert durch Energieversorgung von der generatorisch betriebenen zweiten Elektromaschine 17 her bewirkt.
C) Für quasistationären Betrieb der Brennkraftmaschine 1 wird je nach deren Last und Drehzahl die Drehzahl des High-Speed-Elektromotors 16 und damit die Zusatzluftlieferung durch den Verdichter 15 anhand eines vorgegebenen, in der Regeleinheit 18 abgespeicherten Kennfeldes eingestellt und bedarfsweise verändert sowie bei Erreichen und Feststellung einer genügenden Luftversorgung der Brennkraftmaschine 1 der High-Speed-Elektromotor 16 abgeschaltet.

Damit ist im Zugbetrieb der Brennkraftmaschine 1 bei Beschleunigungsvorgängen das bisherige Turboloch praktisch eliminiert.

## Patentansprüche

1. Vorrichtung zur Leistungssteigerung einer mittels Abgasturbolader (2) aufgeladenen, die Antriebsquelle eines Fahrzeugs oder stationären Anlage bildenden Brennkraftmaschine (1), bei der zusätzlich zum Abgasturbolader (2) ein mit seinem Verdichterrad (19) an der Welle (20) eines Elektromotors (16) angeschlossener Verdichter (15) vorgesehen ist, wobei der Elektromotor (16) die benötigte elektrische Antriebsenergie über eine elektrisch/elektronische Regeleinheit von einer zweiten, generatorisch betriebenen Elektromaschine (17) erhält, die mit der Kurbelwelle (13) der Brennkraftmaschine (1) in mechanischer Antriebsverbindung steht, **gekennzeichnet durch** folgende Merkmale:
a) der Elektromotor ist **durch** einen High-Speed-Elektromotor (16) gebildet, der bauartbedingt in der Lage ist, innerhalb von Sekundenbruchteilen eine extreme Drehzahländerung auf beispielsweise 80000 1/min, erforderlichenfalls auch höhere Drehzahlen zu vollziehen und eine maximale Ausgangsleistung von ca. 5 bis ca. 30 KW bereitzustellen,
b) der High-Speed-Elektromotor (16) und die Elektromaschine (17) sind zu einem speziellen 2-stufigen Elektromaschinenaggregat zusammengefasst,
c) der High-Speed-Elektromotor (16) erhält die benötigte elektrische Antriebsenergie über eine elektrisch/elektronische, rechnerunterstützt arbeitende Regeleinheit (18) wechselweise von der zweiten, generatorisch betriebenen Elektromaschine (17) und/oder einer Batterie (27),
d) die Regeleinheit (18) regelt und steuert den Betrieb der beiden Elektromaschinen (16, 17) sowie die Aufladung der Batterie (27) und deren Energieabgabe zumindest für den Antrieb des High-Speed-Elektromotors (16) auf der Basis festgelegter Regelstrategien,
e) der Betrieb des High-Speed-Elektromotors (16) und dessen Energieversorgung von der zweiten, generatorisch betriebenen Elektromaschine (17) und/oder der Batterie (27) her ist mittels der Regeleinheit (18) derart beeinflussbar, dass **durch** das mit entsprechend notwendiger Drehzahl angetriebene Verdichterrad (19) des zusätzlichen Verdichters (15) in jeder Betriebsart der Brennkraftmaschine (1), also sowohl während des Zugbetriebes als auch des Motorbremsbetriebes, leistungssteigernde Zusatzluft mit optimal angepasster Menge und optimal angepasstem Absolutdruck von bis zu ca. 3 bar über den notwendigen Zeitraum an die Brennkraftmaschine (1) lieferbar ist.

2. Vorrichtung nach Anspruch 1, **dadurch gekennzeichnet, dass** der High-Speed-Elektromotor (16) und die zweite Elektromaschine (17) koaxial ineinander vereinigt sind, wobei der High-Speed-Elektromotor (16) den Innenteil mit einem relativ durchmesserkleinen Rotor bildet, der in einem gemeinsamen Außengehäuse von einem gemeinsamen Stator und dieser wiederum vom Rotor der zweiten Elektromaschine (17) umgeben ist.

3. Vorrichtung nach Anspruch 1, **dadurch gekennzeichnet, dass** die zweite Elektromaschine (17), wenn ausschließlich als Generator vorgesehen, funktional und leistungsmäßig auf diesen Zweck abgestimmt sowie außen an der Brennkraftmaschine (1) angeordnet ist und über einen Triebstrang (21) wie Zahnradgetriebezug oder Riemenantrieb mit der Kurbelwelle (13) der Brennkraftmaschine (1) in mechanischer Antriebsverbindung steht.

4. Vorrichtung nach einem der Ansprüche 1 und 2, **dadurch gekennzeichnet, dass** die zweite Elektromaschine (17), wenn sowohl als Generator als auch als Anlasser, gegebenenfalls auch als Zusatzantriebsquelle vorgesehen, funktional sowie leistungsmäßig auf diese vorgegebenen Zwecke - elektrische Energieerzeugung im Generatorbetrieb, Abgabe entsprechender Antriebsleistung zum Anlassen der Brennkraftmaschine (1) und gegebenenfalls Antriebsunterstützung der Brennkraftmaschine (1) im Motorbetrieb - abgestellt ist.

5. Vorrichtung nach Anspruch 4, **dadurch gekennzeichnet, dass** die zweite Elektromaschine (17) mit ihrer Welle (22) getrieblich mit dem Anlasserzahnkranz (14) am Schwungrad (12) der Brennkraftmaschine (1) oder über einen Zahnradgetriebezug (21) mit der Kurbelwelle (1) in Antriebsverbindung steht.

6. Vorrichtung nach Anspruch 4, **dadurch gekennzeichnet, dass** die zweite, als Generator, Anlasser und gegebenenfalls Zusatzantriebsquelle fungierende Elektromaschine (17) koaxial zur Kurbelwelle (13) der Brennkraftmaschine (1) an einer Stimseite derselben angeordnet und dabei das Elektromaschinengehäuse (35) mit dem Stator (36) am Kurbelgehäuse angeflanscht und der Rotor (37) an der Kurbelwelle (13) der Brennkraftmaschine (1) angeschlossen ist.

7. Vorrichtung nach Anspruch 1, **dadurch gekennzeichnet, dass** der zusätzliche Verdichter (15) eingangsseitig über eine Zuleitung (28, 29) Luft aus der Atmosphäre oder aus einer sich am Ausgang des Verdichters (6) des Abgasturboladers (2) anschließenden und über einen Ladeluftkühler (8) zur Ladeluftsammelleitung (9) führenden Ladeluftleitung (7, 7') saugt und verdichtete Zusatzluft über seinen Ausgang und eine daran angeschlossene Zusatzluftleitung (30) in die Ladeluftleitung (7), dort in einem Bereich zwischen einem Rückschlagventil (33) und dem Ladeluftkühler (8), einspeist.

8. Verfahren zur Leistungssteigerung einer mittels Abgasturbolader aufgeladenen, die Antriebsquelle eines Fahrzeugs oder stationären Anlage bildenden Brennkraftmaschine, bei der zusätzlich zum Abgasturbolader (2) ein mit seinem Verdichterrad (19) an der Welle (20) eines Elektromotors (16) angeschlossener Verdichter (15) vorgesehen ist, wobei der Elektromotor (16) die benötigte elektrische Antriebsenergie über eine elektrisch/elektronische Regeleinheit von einer zweiten, generatorisch betriebenen Elektromaschine (17) erhält, die mit der Kurbelwelle (13) der Brennkraftmaschine (1) in mechanischer Antriebsverbindung steht, **dadurch gekennzeichnet, dass** mittels eines High-Speed-Elektromotors (16), der innerhalb von Sekundenbruchteilen eine extreme Drehzahländerung auf beispielsweise 80000 1/min und mehr vollziehen sowie eine Ausgangsleistung von ca. 5 bis ca. 30 KW bereitstellen kann und die benötigte elektrische Antriebsenergie über eine Regeleinheit (18) wechselweise von einer zweiten, von der Kurbelwelle (13) der Brennkraftmaschine (1) her angetriebenen, generatorisch arbeitenden Elektromaschine (17) und/oder einer Batterie (27) erhält, und mittels eines mit seinem Verdichterrad (19) an der Welle (20) des High-Speed-Elektromotors (16) angeschlossenen, zusätzlich zum Abgasturbolader (2) vorgesehenen Verdichters (15) Zusatzluft mit einem Absolutdruck von bis zu ca. 3 bar förderbar ist, und dass durch eine elektrisch/elektronische, rechnerunterstützt arbeitende Regeleinheit (18) der Betrieb der beiden Elektromaschinen (16, 17) sowie die Aufladung der Batterie (27) und deren Energieabgabe auf der Basis festgelegter Regelstrategien geregelt und dabei der Betrieb des High-Speed-Elektromotors (16) so gesteuert wird, dass leistungssteigemde Zusatzluft in jeder Betriebsart der Brennkraftmaschine (1), also sowohl während des Zugbetriebes als auch während des Motorbremsbetriebes, mit optimal angepasster Menge und optimal angepasstem Druck über den notwendigen Zeitraum mittels des mit entsprechend notwendiger Drehzahl angetriebenen Verdichterrades (19) bereitgestellt und der Brennkraftmaschine (1) zugeführt wird.

9. Verfahren nach Anspruch 8, **dadurch gekennzeichnet, dass** die Lieferung von Zusatzluft durch das Verdichterrad (19) des zusätzlichen Verdichters (15) im gesamten Betriebskennfeld der Brennkraftmaschine (1) durch entsprechend bedarfsgerecht angepasste Leistungseinstellung des High-Speed-Elektromotors (16) erfolgt, der High-Speed-Elektromotor (16) aber auch - sofern die Lieferung von Zusatzluft nicht erforderlich ist-durch entsprechende Befehle der Regeleinheit (18) außer Betrieb gesetzt werden kann.

10. Verfahren nach Anspruch 8, **dadurch gekennzeichnet, dass** die Lieferung der für die Beschleunigung und den Betrieb des Verdichterrades (19) des Verdichters (15) mittels des High-Speed-Elektromotors (16) notwendigen elektrischen Energie durch die Batterie (27) und/oder die zweite Elektromaschine (17) durch intelligentes Drehzahlmanagement und mit einer Aufteilung der Leistungsanteile in der Weise erfolgt, dass eine maximal zulässige Belastung der im Generatorbetrieb der zweiten Elektromaschine (17) von dieser gespeisten Batterie (27) nicht überschritten wird.

11. Verfahren nach Anspruch 8 in Anwendung bei einem Fahrzeug mit Schaltgetriebe, zugeordneter Kupplung und elektrisch erfassbarer Gas- bzw. Fahrpedal-Betätigung, **gekennzeichnet durch** folgende, über die Regeleinheit (18) bewirkte Regelstrategien für den Betrieb des das Verdichterrad (19) des zusätzlichen Verdichters (15) antreibenden High-Speed-Elektromotors (16)
A) zum Motorbremsen: Schnellstmöglichstes Hochfahren des High-Speed-Elektromotors (16) auf maximale Antriebsleistung **durch** Energieversorgung ausschließlich von der generatorisch betriebenen zweiten Elektromaschine (17) her, anschließend stationärer Betrieb mit maximal zulässiger Leistung mit Energieversorgung von der zweiten Elektromaschine (17) und/oder Batterie (27) her und - falls die volle Motorstaubremsleistung nicht mehr gefordert ist - Abschaltung des High-Speed-Elektromotors (16),
B) zum Beschleunigen - drehzahlabhängig - oder bei notwendigem Lastsprung der Brennkraftmaschine:
B1) bei eingelegtem Gang nach Kupplungsbetätigung und Schalterkennung Hochfahren der Drehzahl des High-Speed-Elektromotors (16) auf ca. 1/4 bis 1/2 der Maximaldrehzahl **durch** Energieversorgung ausschließlich von der generatorisch betriebenen zweiten Elektromaschine (17) her,
B2)nach anschließender Gas- oder Fahrpedalbetätigung abhängig von Pedalweg und -betätigungsgeschwindigkeit weiteres Hochfahren der Drehzahl des High-Speed-Elektromotors (16) auf einen notwendigen Wert **durch** Energieversorgung aus der generatorisch betriebenen zweiten Elektromaschine (17) und erforderlichenfalls aus der Batterie (27),
B3) aus quasistationärem Brennkraftmaschinenbetrieb und eingelegt bleibendem Gang heraus bei Gas- bzw. Fahrpedalbetätigung abhängig von Pedalweg und -betätigungsgeschwindigkeit
a) Hochfahren der Drehzahl des High-Speed-Elektromotors (16) auf ca. 1/2 der Maximaldrehzahl **durch** Energieversorgung aus der Batterie (27) sowie der generatorisch betriebenen Elektromaschine (17),
b) weiteres Hochfahren der Drehzahl des High-Speed-Elektromotors (16) auf notwendige Größe **durch** Energieversorgung aus der generatorisch betriebenen zweiten Elektromaschine (17),
B4) für stationären Betrieb der Brennkraftmaschine (1) bei hoher Last und niedrigen Drehzahlen:
Einstellung und Veränderung der Drehzahl anhand eines vorgegebenen, abgespeicherten Kennfeldes und bei Erreichen genügender Luftversorgung der Brennkraftmaschine (1) Abschaltung des High-Speed-Elektromotors (16).

## Claims

1. Device for increasing the output of an internal combustion engine (1) which is supercharged by means of a turbocharger (2), constitutes the drive unit of a vehicle or stationary system and is, in addition to the turbocharger (2), provided with a compressor (15) whose compressor wheel (19) is connected to the shaft (20) of an electric motor (16) supplied with the necessary electric driving energy via an electric/electronic control unit by a second electric machine (17) working as a generator and connected with the crankshaft (13) of the internal combustion engine (1) in a mechanical drive connection, **characterised by** the following features:
a. the electric motor is a high-speed electric motor (16) whose design enables it, within fractions of a second, to perform extreme speed changes, eg. to 80,000 rpm or to even higher speeds if necessary, and to provide a maximum output of approx. 5 to approx. 30 kW,
b. the high-speed electric motor (16) and the electric machine (17) are combined to form a special 2-stage electric machine unit,
c. the high-speed electric motor (16) receives the necessary electric driving energy via an electric/electronic, computer-assisted control unit (18) alternately from the second electric machine (17) working as a generator and/or from a battery (27),
d. the control unit (18) regulates and controls the operation of the two electric machines (16, 17) and the charging of the battery (27) and its energy output at least for driving the high-speed electric motor (16) on the basis of specified control strategies,
e. the operation of the high-speed electric motor (16) and its energy supply from the second electric machine (17) working as a generator and/or from the battery (27) can, by means of the control unit (18), be influenced in such a way that the compressor wheel (19), driven at the necessary speed, of the additional compressor (15) can, in any operating condition of the internal combustion engine (1), ie both during pulling and pushing operation, supply to the internal combustion engine (1) output-increasing additional air in an optimally adjusted quantity and at an optimally adjusted absolute pressure of up to approx. 3 bar over the period necessary.

2. Device according to Claim 1, **characterised in that** the high-speed electric motor (16) and the second electric machine (17) are coaxially united with each other, the high-speed electric motor (16) constituting the inner part with a rotor which has a relatively small diameter and is, in a common outer housing, surrounded by a common stator which in turn is surrounded by the rotor of the second electric machine (17).

3. Device according to Claim 1, **characterised in that** if exclusively intended for generator operation the second electric machine (17) is, with regard to its functioning and output, adjusted to this purpose, is arranged on the outside of the internal combustion engine (1) and is in a mechanical drive connection with the crankshaft (13) of the internal combustion engine (1) via a driveline (21) such as a gear or belt drive.

4. Device according to the Claims 1 and 2, **characterised in that** if intended for operation as a generator and a starter and, if required, also as an auxiliary drive unit the second electric machine (17) is, with regard to its functioning and output, adjusted to these purposes - electric power generation in generator operation, output of corresponding driving power for starting the internal combustion engine (1) and, if required, driving support for the internal combustion engine (1) in motor operation.

5. Device according to Claim 4, **characterised in that** the second electric machine (17) is, with its shaft (22), in a gear-type drive connection either with the starter ring gear (14) on the flywheel (12) of the-internal combustion engine (1) or with the crankshaft (1) via a gear train (21).

6. Device according to Claim 4, **characterised in that** the second electric machine (17) working as a generator, a starter and, if required, as an auxiliary drive unit is arranged coaxially to the crankshaft (13) of the internal combustion engine (1) on a front face of said internal combustion engine (1), the electric machine housing (35) with the stator (36) is flanged on to the crankcase and the rotor (37) is connected to the crankshaft (13) of the internal combustion engine (1).

7. Device according to Claim 1, **characterised in that** on its intake side the additional compresor (15) sucks in air from the atmosphere via a supply line (28, 29) or air from a charge-air line (7, 7') connected to the output of the compressor (6) of the turbocharger (2) and extending via an intercooler (8) to the charge-air manifold (9) and feeds compressed additional air into the charge-air line (7), namely into an area between a check valve (33) and the intercooler (8), via its output and an additional air line (30) connected to said output.

8. Procedure for increasing the output of an internal combustion engine supercharged by means of a turbocharger and constituting the drive unit of a vehicle or stationary system, which internal combustion engine is, in addition to the turbocharger (2), provided with a compressor (15) whose compressor wheel (19) is connected to the shaft (20) of an electric motor (16) supplied with the necessary electric driving energy via an electric/electronic control unit by a second electric machine (17) working as a generator and connected with the crankshaft (13) of the internal combustion engine (1) in a mechanical drive connection, **characterised in that** additional air with an absolute pressure of up to approx. 3 bar can be supplied by means of a high-speed electric motor (16) whose design enables it, within fractions of a second, to perform extreme speed changes, eg. to 80,000 rpm or to even higher speeds, and to provide a maximum output of approx. 5 to approx. 30 kW and which receives the required electric driving energy via a control unit (18) alternately from a second electric machine (17) working as a generator and driven by the crankshaft (13) of the internal combustion engine (1) and/or from a battery (27), and by means of a compressor (15) which is, with its compressor wheel (19), connected to the shaft (20) of the high-speed electric motor (16) and is provided in addition to the turbocharger (2), and that the operation of the two electric machines (16, 17) and the charging of the battery (27) and its output are controlled by means of an electric/electronic computer-assisted control unit (18) on the basis of specified control strategies and that the operation of the high-speed electric motor (16) is controlled in such a way that in any operating mode of the internal combustion engine (1), ie both during pulling operation and during operation of the engine brake, output-increasing additional air is provided in an optimally adjusted quantity and at an optimally adjusted pressure over the period necessary by means of the compressor wheel (19) driven at the speed necessary and is supplied to the internal combustion engine (1).

9. Procedure according to Claim 8, **characterised in that** additional air is supplied by the compressor wheel (19) of the additional compressor (15) throughout the entire operating characteristic of the internal combustion engine (1) by means of corresponding, requirement-oriented output adjustment of the high-speed electric motor (16) which - if the supply of additional air is not required - can be taken out of operation by means of corresponding commands from the control unit (18).

10. Procedure according to Claim 8, **characterised in that** the. electric energy necessary for the acceleration and operation of the compressor wheel (19) of the compressor (15) by means of the high-speed electric motor (16) is supplied by the battery (27) and/or the second electric. machine (17) through intelligent speed management and by means of dividing the power shares in such a way that the maximum permissible load on the battery supplied by the second electric machine (17) working in the generator operating mode is not exceeded.

11. Procedure according to Claim 8, applied in a vehicle with manual gearbox, associated clutch and electrically recordable accelerator pedal actuation, **characterised by** the following control strategies, implemented by the control unit (18), for operating the high-speed electric motor (16) driving the compressor wheel (19) of the additional compressor (15)
A) for decelerating the engine: Accelerating the high-speed electric motor (16) to maximum output as quickly as possible through energy supplied exclusively from the second electric machine (17) working as a generator, then stationary operation at maximum permissible output with energy supplied from the second electric machine (17) and/or from the battery (27) and - if maximum engine flap brake output is no longer required-switching off of the high-speed electric motor (16).
B) for accelerating - speed-dependently - or in the event of necessary load jumps of the internal combustion engine:
B1)when the gear is engaged after actuation of the clutch pedal and recognition of the shifting operation, the speed of the high-speed electric motor (16) is increased to approx. 1/4 to 1/2 of the maximum speed by means of energy supplied exclusively from the second electric machine (17) working as a generator,
B2)after the accelerator pedal has subsequently been actuated as a function of the pedal travel and the pedal actuation speed, the speed of the high-speed electric motor (16) is further increased to a necessary value by means of energy supplied from the second electric machine (17) working as a generator and, if required, also from the battery (27),
B3)from a quasi-stationary operating condition of the internal combustion engine, with the gear remaining engaged and the accelerator pedal being actuated as a function of the pedal travel and the actuation speed
a) the speed of the high-speed electric motor (16) is increased to approx. 1/2 of the maximum speed by means of energy supplied from the battery (27) and from the second electric machine (17) working as a generator
b) the speed of the high-speed electric motor (16) is further increased to the necessary value by means of energy supplied from the second electric-machine (17) working as a generator
B4)for stationary operation of the internal combustion engine (1) at high loads and low speeds:
the speed is set and changed by means of a specified; stored characteristic and the high-speed electric motor (16) is switched off when the internal combustion engine (1) is supplied with sufficient air.

## Revendications

1. Dispositif visant à accroître les performances d'un moteur à combustion interne (1) suralimenté par un turbocompresseur à gaz d'échappement (2), formant la source propulsive d'un véhicule ou motrice d'une installation stationnaire et équipé en supplément du turbocompresseur à gaz d'échappement (2) d'un compresseur (15) couplé avec sa turbine (19) à l'arbre (20) d'un moteur électrique (16), auquel cas le moteur électrique (16) obtient l'énergie de propulsion nécessaire par le biais d'une unité de régulation électrique/électronique d'une deuxième machine électrique (17) entraînée par l'alternateur, laquelle est reliée par entraînement mécanique au vilebrequin (13) du moteur à combustion interne (1), **caractérisé par** les spécificités suivantes :
a) le moteur électrique est constitué d'un moteur électrique à régime rapide (16) qui est en mesure, en fonction de sa conception, de procéder en l'espace de fractions de secondes à un changement extrême de son régime pour passer par exemple à 80000 tr/mn, si nécessaire à des régimes plus élevés, et à mettre à disposition une puissance maximale de sortie d'env. 5 jusqu'à env. 30 kW,
b) le moteur électrique à régime rapide (16) et la machine électrique (17) sont regroupés en un seul organe électrique spécial à 2 vitesses,
c) le moteur électrique à régime rapide (16) reçoit l'énergie électrique de propulsion nécessaire par le biais d'une unité de régulation (18) électrique/électronique assistée par ordinateur, en alternance par la deuxième machine électrique (17) entraînée par l'alternateur et/ou par une batterie (27),
d) l'unité de régulation (18) régule et commande le fonctionnement des deux machines électriques (16, 17) de même que la charge de la batterie (27) et sa fourniture d'énergie au minimum pour l'entraînement du moteur électrique à régime rapide (16) sur la base de stratégies de régulation définies,
e) le fonctionnement du moteur électrique à régime rapide (16) et son alimentation en énergie par la deuxième machine électrique (17) entraînée par l'alternateur et/ou par la batterie (27) peut être influencé au moyen de l'unité de régulation (18) de telle manière à pouvoir de fournir au moteur à combustion interne (1) de l'air supplémentaire permettant d'augmenter les performances en quantité adaptée efficacement et avec une pression absolue adaptée efficacement pouvant atteindre env. 3 bar au cours de la période nécessaire par le biais de la turbine (19) du compresseur supplémentaire (15), entraînée à un régime nécessaire selon la situation dans chaque mode de fonctionnement du moteur à combustion interne (1), aussi bien pendant la traction que pendant le fonctionnement du frein moteur.

2. Dispositif selon la revendication 1, **caractérisé par le fait que** le moteur électrique à régime rapide (16) et la deuxième machine électrique (17) sont réunis l'un dans l'autre coaxialement, auquel cas le moteur électrique à régime rapide (16) constitue la partie intérieure avec un rotor d'un diamètre relativement petit et est entouré d'un stator commun dans un boîtier extérieur commun, et ce stator est à son tour entouré par le rotor de la deuxième machine électrique (17).

3. Dispositif selon la revendication 1, **caractérisé par le fait que** la deuxième machine électrique (17), lorsqu'elle est prévue pour fonctionner uniquement en tant qu'alternateur, est adaptée à ce but sur le point fonctionnel et sur les performances et disposé à l'extérieur du moteur à combustion interne (1) et est en liaison mécanique avec le vilebrequin (13) du moteur à combustion interne (1) par le biais d'une chaîne cinématique (21) telle qu'un train d'engrenage ou un entraînement par courroie.

4. Dispositif selon l'une des revendications 1 et 2, **caractérisé par le fait que** la deuxième machine électrique (17), lorsqu'elle peut être utilisée aussi bien en tant qu'alternateur qu'en tant que démarreur et, le cas échéant, en tant que source de propulsion supplémentaire, adaptée à ces buts définis sur le point fonctionnel et sur les performances, - production d'énergie électrique en mode alternateur, fourniture de la puissance propulsive correspondante pour le démarrage du moteur à combustion interne (1) et, le cas échéant, auxiliaire propulsif du moteur à combustion interne (1) en mode moteur, est mise hors fonction.

5. Dispositif selon la revendication 4, **caractérisé par le fait que** la deuxième machine électrique (17) est en liaison par son arbre (22) et par le biais d'un train d'engrenages avec la couronne du démarreur (14) sur le volant (12) du moteur à combustion interne (1) ou par le biais d'un train d'engrenage (21) avec le vilebrequin (13).

6. Dispositif selon la revendication 4, **caractérisé par le fait que** la deuxième machine électrique (17) prévue en tant qu'alternateur, démarreur et, le cas échéant, comme source propulsive supplémentaire, est disposée coaxialement par rapport au vilebrequin (13) du moteur à combustion interne (1) sur l'une des faces de ce dernier et, dans ce cas, le carter de la machine électrique (35) est bridé au stator (36) sur le bloc moteur et le rotor (37) est relié au vilebrequin (13) du moteur à combustion internè (1).

7. Dispositif selon la revendication 1, **caractérisé par le fait que** le compresseur supplémentaire (15) aspire du côté admission de l'air atmosphérique par une conduite d'admission (28, 29) ou par une conduite d'air de suralimentation (7, 7') reliée à la sortie du compresseur (6) du turbocompresseur à gaz d'échappement (2) et conduisant au collecteur d'air de suralimentation (9) par le biais d'un radiateur d'air de suralimentation (8), et stocke, par le biais de sa sortie et d'une conduite d'air supplémentaire (30) reliée à celle-ci, l'air supplémentaire comprimé dans la conduite d'air de suralimentation (7), à ce point dans une zone comprise entre un clapet anti-retour (33) et le radiateur d'air de suralimentation (8).

8. Procédé permettant d'accroître les performances d'un moteur à combustion interne (1) suralimenté par un turbocompresseur à gaz d'échappement et constituant la source propulsive d'un véhicule ou motrice d'une installation stationnaire, pour lequel est prévu, en plus du turbocompresseur à gaz d'échappement (2), un compresseur (15) relié avec sa turbine (19) à l'arbre (20) d'un moteur électrique (16), auquel cas le moteur électrique (16) reçoit l'énergie électrique d'entraînement par l'intermédiaire d'une unité de régulation électrique/électronique par une deuxième machine électrique (17) entraînée par l'alternateur, celle-ci étant en liaison mécanique avec le vilebrequin (13) du moteur à combustion interne (1), **caractérisé par le fait qu'**au moyen d'un moteur électrique à régime rapide (16) qui peut procéder en l'espace d'une fraction de seconde à un changement de régime extrême pour tourner par exemple à 80000 tr/mn et plus ainsi que mettre à disposition une puissance de sortie d'env. 5 jusqu'à env. 30 kW et qui reçoit l'énergie électrique de propulsion par l'intermédiaire d'une unité de régulation (18) en alternance par une machine électrique (17) entraînée par le vilebrequin (13) du moteur à combustion interne (1) et fonctionnant comme alternateur et/ou par une batterie (27), et au moyen d'un compresseur (15) relié par sa turbine (19) à l'arbre (20) du moteur électrique à régime rapide (16) et prévu en supplément du turbocompresseur à gaz d'échappement (2), de l'air supplémentaire peut être fourni à une pression absolue pouvant atteindre 3 bar, et **par le fait que**, par le biais d'une unité de régulation électrique/électronique assistée par ordinateur (18), le fonctionnement des deux machines électriques (16, 17) ainsi que la charge de la batterie (27) et sa fourniture en énergie sont régulés sur la base de stratégies de régulation définies et, dans ce cas, le moteur électrique à régime rapide (16) est commandé de telle manière que l'air supplémentaire permettant d'accroître les performances soit mis à disposition dans chaque type de fonctionnement du moteur à combustion interne (1), à savoir aussi bien pendant la traction que pendant le fonctionnement du frein moteur, avec une quantité et une pression adaptées de manière optimale pendant le temps nécessaire grâce à la turbine de compresseur (19) entraînée à un régime nécessaire dans cette situation et est fourni au moteur à combustion interne (1).

9. Procédé selon la revendication 8, **caractérisé par le fait que** l'air supplémentaire est fourni par la turbine (19) du compresseur supplémentaire (15) dans l'ensemble de la courbe caractéristique de fonctionnement du moteur à combustion interne (1) par un réglage de la puissance adapté aux besoins du moteur électrique à régime rapide (16), et **par le fait que** le moteur électrique à régime rapide (16) peut cependant également être mis hors circuit par des instructions correspondantes de l'unité de régulation (18) - tant que la fourniture d'air supplémentaire n'est pas indispensable.

10. Procédé selon la revendication 8, **caractérisé par le fait que** l'énergie électrique nécessaire pour l'accélération et le fonctionnement de la turbine (19) du compresseur (15) au moyen du moteur électrique à régime rapide (16) est fourni par la batterie (27) et/ou par la deuxième machine électrique (17) par le biais d'une gestion intelligente du régime et avec une répartition des parts de puissance de telle manière qu'une charge admissible maximale de la batterie fournie par la deuxième machine électrique (17) fonctionnant en mode alternateur ne soit pas dépassée.

11. Procédé selon la revendication 8 en application dans un véhicule avec boîte de vitesses manuelle, un embrayage adjoint et un actionnement de la pédale d'accélérateur à signal électrique, **caractérisé par** les stratégies de régulation suivantes provoquées par l'unité de régulation (18) pour le fonctionnement du moteur électrique à régime rapide (16) entraînant la turbine (19) du compresseur supplémentaire (15)
A) pour le freinage du moteur : poussée la plus rapide possible du moteur électrique à régime rapide (16) pour atteindre la puissance d'entraînement maximale par l'alimentation en énergie uniquement à partir de la deuxième machine électrique (17) entraînée par l'alternateur, ensuite fonctionnement stationnaire à une puissance maximale admissible avec une alimentation en énergie à partir de la deuxième machine électrique (17) et/ou de la batterie (27) et, au cas où la puissance intégrale de freinage d'engorgement du moteur n'est plus nécessitée, mise hors circuit du moteur électrique à régime rapide (16).
B) pour l'accélération - en fonction du régime - ou lors de sauts de charge nécessaires du moteur à combustion interne :
B1) lorsqu'un rapport est enclenché après l'actionnement de l'embrayage et la reconnaissance du passage d'un rapport, poussée du régime du moteur électrique à régime rapide (16) à env. ¼ jusqu'à ½ du régime maximal par l'alimentation en énergie provenant uniquement de la deuxième machine électrique (17) entraînée par l'alternateur,
B2) après l'actionnement qui suit de la pédale d'accélérateur dépendant de la course de la pédale et de la vitesse d'actionnement de la pédale, poussée supplémentaire du régime du moteur électrique à régime rapide (16) pour atteindre une valeur nécessaire par l'alimentation en énergie provenant de la deuxième machine électrique (17) entraînée par l'alternateur et, si nécessaire, de la batterie (27),
B3) à partir du fonctionnement quasi-stationnaire du moteur à combustion interne et du rapport resté engagé en cas d'actionnement de la pédale d'accélérateur dépendant de la course de la pédale et de la vitesse d'actionnement de la pédale
a) Poussée du régime du moteur électrique à régime rapide (16) pour atteindre env. ½ du régime maximal par l'alimentation en énergie à partir de la batterie (27) ainsi que de la machine électrique (17) entraînée par l'alternateur,
b) Poursuite de la poussée du régime du moteur électrique à régime rapide (16) pour atteindre la valeur nécessaire par l'alimentation en énergie à partir de la deuxième machine électrique (17) entraînée par l'alternateur,
B4) pour le fonctionnement stationnaire du moteur à combustion interne (1) à contrainte élevée et à bas régimes :
Réglage et modification du régime à l'aide d'une courbe caractéristique mémorisée définie, et lors de l'obtention d'une alimentation en air suffisante du moteur à combustion interne (1), mise hors circuit du moteur électrique à régime rapide (16).
